# FASCICULE DE BREVET EUROPEEN

(11) **EP 4 472 888 B1**
(45) Date de publication et mention de la délivrance du brevet: **28.01.2026**
(21) Numéro de dépôt: 23706443.1
(22) Date de dépôt: 30.01.2023
(51) Int. Cl.: B64U 30/26, B64U 30/297, B64U 40/10, B64U 50/23, B64C 27/10, B64C 27/52

(54) **DISPOSITIF DE PROPULSION POUR AÉRODYNE À VOILURE TOURNANTE ET À DÉCOLLAGE ET ATTERRISSAGE VERTICAUX ET AÉRODYNE ÉQUIPÉ D'UN TEL DISPOSITIF DE PROPULSION**
ANTRIEBSVORRICHTUNG FÜR EINE SENKRECHT STARTENDE UND LANDENDE DREHFLÜGEL-AERODYNE UND EINE MIT EINER SOLCHEN ANTRIEBSVORRICHTUNG AUSGESTATTETE AERODYNE
PROPULSION DEVICE FOR VERTICAL TAKE-OFF AND LANDING ROTARY WING AERODYNE AND AERODYNE EQUIPPED WITH SUCH A PROPULSION DEVICE

(30) Priorité: 04.02.2022 FR 2200884
(43) Date de publication de la demande: 11.12.2024
(73) Titulaire: KNDS France, 78034 Versailles Cedex (FR)
(72) Inventeur: GAUTIER, Pierre, 18023 Bourges (FR)
(74) Mandataire: Cabinet Chaillot
(86) Numéro de dépôt international: PCT/IB2023/050769
(87) Numéro de publication internationale: WO 2023/148595

(56) Documents cités:
- FR-A1- 3 095 189

## Description

Le domaine technique de l'invention est celui des aérodynes à voilure tournante et à décollage et atterrissage verticaux, et plus spécifiquement celui des aérodynes à propulsion par hélices (ou rotors) coaxiales contrarotatives.

En particulier, la présente invention concerne un dispositif de propulsion par hélices coaxiales contrarotatives et un aérodyne de type drone comprenant au moins un tel dispositif de propulsion.

Dans la présente demande, le terme « propulsion » comprend la sustentation de l'aérodyne, la propulsion en vol en translation dans les directions verticale, longitudinale et latérale, ainsi que le contrôle d'attitude en lacet, roulis et tangage

Il est connu par le brevet FR3095189 un dispositif de propulsion d'aérodyne à hélices coaxiales contrarotatives qui offre par rapport aux dispositifs antérieurs (en particulier ceux connus du brevet FR2980117) une maniabilité améliorée, tout en conservant l'avantage de simplicité procuré par l'absence de systèmes collectifs et cycliques de variation du pas des pales.

Ce dispositif comprend un montage de chaque hélice sur un châssis de telle sorte que seules les hélices sont déplacées autour des axes de lacet, de roulis et de tangage, par l'utilisation d'une liaison rotule à doigt creuse qui relie chaque hélice à une partie rotative qui est située à l'intérieur du châssis.

La liaison rotule à doigt autorise ainsi la rotation de l'hélice associée uniquement autour des axes de roulis et de tangage alors que le reste du dispositif de propulsion reste fixe par rapport à ces axes.

Ce dispositif présente cependant pour inconvénient de comporter de nombreuses pièces, ce qui conduit à des difficultés pour le montage et le démontage et complique la maintenance.

Par ailleurs l'architecture décrite par le brevet FR3095189 comprend de nombreuses tiges pour assurer l'inclinaison des hélices autour des axes de roulis et de tangage : des tiges motorisées associées à des tiges dites miroir pour équilibrer les efforts et à des tiges de rattrapage d'usure pour assurer le parallélisme des hélices.

Cette architecture est également très complexe et elle entraîne des jeux fonctionnels qui nuisent à la fiabilité de la commande.

C'est le but de l'invention que de proposer un dispositif de propulsion pour aérodyne à voilure tournante et à décollage et atterrissage verticaux ne présentant pas de tels inconvénients.

Ainsi le dispositif de propulsion selon l'invention est de conception simple, compacte et permet de faciliter le montage, le démontage et la maintenance de l'aérodyne.

La présente invention a donc pour objet un dispositif de propulsion pour aérodyne à voilure tournante et à décollage et atterrissage verticaux, par hélices coaxiales et contrarotatives mobiles en lacet, roulis et tangage, le dispositif de propulsion comprenant :
- un châssis creux et ayant un axe longitudinal qui, en utilisation, est coaxial à un axe de lacet,
- une hélice supérieure et une hélice inférieure ayant chacune un anneau porte-pales à la périphérie duquel des pales à pas fixe sont fixées ou destinées à être fixées, les hélices étant espacées l'une au-dessus de l'autre selon l'axe de lacet, chaque hélice définissant un disque d'hélice et étant apte à être entraînée en rotation autour d'un axe de rotation qui est perpendiculaire au disque d'hélice et à être inclinée autour d'un axe de roulis et d'un axe de tangage,
- des moyens d'entraînement pour entraîner en rotation chaque hélice autour de son axe de rotation, l'anneau porte-pales de chaque hélice étant relié aux moyens d'entraînement par une liaison rotule à doigt, dont le centre est une intersection du disque d'hélice respectif et de l'axe de lacet et dont l'axe est l'axe de rotation de l'hélice, et
- des moyens de commande d'inclinaison pour incliner les hélices autour de l'axe de roulis et de l'axe de tangage,

le dispositif de propulsion étant caractérisé par le fait que les moyens de commande d'inclinaison comprennent :
   - deux paires de tiges de commande, les tiges de commande étant de longueur fixe, situées entre les hélices et parallèles à l'axe de lacet, les deux tiges de commande d'une même paire étant disposées de façon diamétralement opposées l'une de l'autre par rapport à l'axe de lacet, chaque tige de commande étant déplaçable en translation parallèlement à l'axe de lacet, dans les deux sens, de telle sorte que chaque tige de commande est apte à appuyer par une extrémité de celle-ci sur un anneau porte-pales d'une hélice de façon à la faire basculer autour de l'axe de roulis pour une première paire ou de l'axe de tangage pour une seconde paire, et
   - deux dispositifs de commande servant chacun à commander le déplacement en translation des tiges de commande de l'une respective desdites paires, chaque dispositif de commande comprenant une roue de commande montée rotative autour d'un axe de rotation coaxial à l'axe de lacet et dont la rotation est commandée par des moyens moteurs,
deux pignons de commande étant montés chacun sur l'une respective des tiges de commande et en engrènement direct avec la roue de commande, et le châssis portant, pour chaque tige de commande, un trou taraudé dans lequel est vissée une partie filetée de la tige de commande, un sens du filetage de la partie filetée et du trou taraudé pour une tige de commande d'une paire étant l'inverse du sens du filetage de la partie filetée et du trou taraudé pour l'autre tige de commande de ladite paire, ce par quoi une rotation d'une roue de commande conduit à des mouvements de translation antagonistes des deux tiges de commande d'une même paire.

Par conséquent, les moyens de commande d'inclinaison selon la présente invention sont capables de faire basculer de manière synchronisée les deux hélices et autour de l'axe de roulis et/ou de l'axe de tangage par une commande mécanique positive au niveau de chaque tige d'une même paire, ce qui assure une commande plus fiable que la solution selon l'art antérieur : la latence mécanique lors de la commande est évitée, les jeux sont réduits et les efforts entre les deux tiges d'une même paire sont équilibrés. Il en résulte une commande tout à la fois simplifiée, plus fiable et plus robuste, tout en facilitant les opérations de montage, de maintenance et de réparation.

Avantageusement, les tiges de commande sont au nombre de quatre et décalées angulairement les unes des autres de 90°.

Avantageusement, chaque tige de commande comprend la partie filetée et une partie lisse, le pignon de commande respectif est monté entre la partie filetée et la partie lisse, et chaque partie lisse s'étend à travers un trou lisse de guidage en translation porté par le châssis.

Avantageusement, chaque roue de commande est dentée seulement sur deux secteurs diamétralement opposés et dimensionnés chacun pour que l'engrènement avec le pignon de commande respectif soit maintenu sur toute la course de translation de la tige de commande respective, par exemple une épaisseur des pignons de commande étant à cet effet supérieure à celle de la roue de commande.

Avantageusement, les deux roues de commande sont empilées l'une sur l'autre, avec une couche de matériau antifriction interposé entre elles.

Avantageusement, chaque anneau porte-pales porte un plateau contre lequel les tiges de commande sont en contact, chaque plateau étant relié à l'anneau porte-pales respectif par un roulement permettant de désolidariser en rotation le plateau et l'anneau porte-pales respectif.

Avantageusement, les moyens moteurs servant à faire tourner une roue de commande se situent à l'intérieur du châssis, entre ladite roue de commande et l'hélice associée.

Selon un mode de réalisation particulier de la présente invention, le châssis est divisé en deux boîtiers aptes à être assemblés l'un à l'autre, chaque boîtier étant associé à une hélice respective et portant les moyens d'entraînement, pour entraîner en rotation ladite hélice, et la liaison rotule à doigt respective, chaque boîtier portant également une roue de commande et les trous à travers chacun desquels est engagé une tige de commande respective. Tous lesdits trous taraudés peuvent être portés par l'un des boîtiers et l'autre boîtier pourra porter, le cas échéant, tous lesdits trous lisses, ou bien les trous taraudés et les trous lisses peuvent être répartis équitablement sur les deux boîtiers.

Avantageusement, chaque boîtier comprend une plaque de fond à partir de laquelle s'étend, sur un côté de la plaque de fond, une paroi latérale circonférentielle définissant des logements dans lesquels sont ménagés des trous taraudés ou, le cas échéant, des trous lisses ou les deux.

Avantageusement, chaque roue de commande est montée sur l'autre côté de la plaque de fond, avec de préférence une couche de matériau antifriction interposée entre la plaque de fond et la roue de commande, les plaques de fond délimitant, une fois les boîtiers assemblés l'un à l'autre, un intervalle ouvert latéralement dans lequel se situent les roues de commande.

Selon un mode de réalisation particulier de la présente invention, les moyens d'entraînement comprennent, pour chaque hélice, un moteur couple dont le rotor est solidaire d'une cage sur laquelle est fixée la liaison rotule à doigt sur laquelle pivote l'anneau porte-pales de ladite hélice, et dont le stator est solidaire du châssis.

Dans ce mode de réalisation particulier, avantageusement un moyeu axial est fixé sur chaque plaque de fond, du même côté que la paroi latérale circonférentielle, chaque moyeu axial se présentant sous la forme d'une pièce tubulaire dont l'axe longitudinal est coaxial à l'axe de lacet, le stator du moteur couple entourant le moyeu axial respectif.

Avantageusement, la cage est en forme de cloche et comprend une première partie tubulaire de plus grand diamètre, qui entoure le moteur couple et dont le rotor est solidaire, et une seconde partie tubulaire, de plus petit diamètre, entourant le moyeu axial et montée à rotation sur ce dernier, la liaison rotule à doigt étant fixée à la seconde partie tubulaire.

Avantageusement, les moyens moteurs servant à faire tourner une roue de commande se situent à l'intérieur du moyeu axial respectif.

La présente invention a également pour objet un aérodyne à voilure tournante et à décollage et atterrissage verticaux, dont la propulsion est assurée par un dispositif de propulsion, caractérisé par le fait que le dispositif de propulsion est tel que défini ci-dessus.

On souligne ici que la configuration des moyens d'entraînement en rotation des hélices décrite ci-dessus est indépendante de la configuration des moyens de commande de leurs inclinaisons.

Il est ainsi également divulgué par la présente un dispositif de propulsion pour aérodyne à voilure tournante et à décollage et atterrissage verticaux, par hélices coaxiales et contrarotatives mobiles en lacet, roulis et tangage, le dispositif de propulsion comprenant :
- un châssis creux et ayant un axe longitudinal qui, en utilisation, est coaxial à l'axe de lacet,
- une hélice supérieure et une hélice inférieure ayant chacune un anneau porte-pales à la périphérie duquel des pales à pas fixe sont fixées ou destinées à être fixées, les hélices étant espacées l'une au-dessus de l'autre selon l'axe de lacet, chaque hélice définissant un disque d'hélice et étant apte à être entraînée en rotation autour d'un axe de rotation qui est perpendiculaire au disque d'hélice et à être inclinée autour de l'axe de roulis et de l'axe de tangage,
- des moyens d'entraînement pour entraîner en rotation chaque hélice autour de son axe de rotation, l'anneau porte-pales de chaque hélice étant relié aux moyens d'entraînement par une liaison rotule à doigt, dont le centre est l'intersection du disque d'hélice respectif et de l'axe de lacet et dont l'axe est l'axe de rotation de l'hélice, et
- des moyens de commande d'inclinaison pour incliner les hélices autour de l'axe de roulis et de l'axe de tangage,
le dispositif de propulsion étant caractérisé par le fait que les moyens d'entraînement comprennent, pour chaque hélice, un moteur couple dont le rotor est solidaire d'une cage sur laquelle est fixée la liaison rotule à doigt sur laquelle pivote l'anneau porte-pales de ladite hélice, et dont le stator est solidaire du châssis, par le fait que le châssis comprend, pour chaque hélice, un moyeu axial se présentant sous la forme d'une pièce tubulaire dont l'axe longitudinal est coaxial à l'axe de lacet, le stator du moteur couple entourant le moyeu axial respectif, et par le fait que la cage est en forme de cloche et comprend une première partie tubulaire de plus grand diamètre, qui entoure le moteur couple et dont le rotor est solidaire, et une seconde partie tubulaire, de plus petit diamètre, entourant le moyeu axial et montée à rotation sur ce dernier, la liaison rotule à doigt étant fixée à la seconde partie tubulaire.

Pour mieux illustrer l'objet de la présente invention, on va en décrire ci-après un mode de réalisation particulier, avec référence aux dessins annexés. Sur ces dessins :
[Fig. 1] est une vue d'ensemble d'un dispositif de propulsion selon un mode de réalisation particulier de la présente invention.
[Fig. 2] est une vue en perspective du dispositif de propulsion, les pales ayant été omises.
[Fig. 3] est une vue de dessus du dispositif de propulsion tel que représenté sur la Figure 2.
[Fig. 4] est une vue en coupe verticale du dispositif de propulsion, suivant le plan de coupe A-A sur la Figure 3.
[Fig. 5] est une vue en coupe verticale du dispositif de propulsion, suivant le plan de coupe B-B sur la Figure 3.
[Fig. 6] est une vue en perspective d'une partie du dispositif de propulsion, montrant uniquement l'un des boîtiers, les tiges de commande et la roue de commande qui lui sont associées, ainsi que les tiges de commande et la roue de commande associées à l'autre boîtier.
[Fig. 7] est une vue latérale schématique d'un drone selon la présente invention.

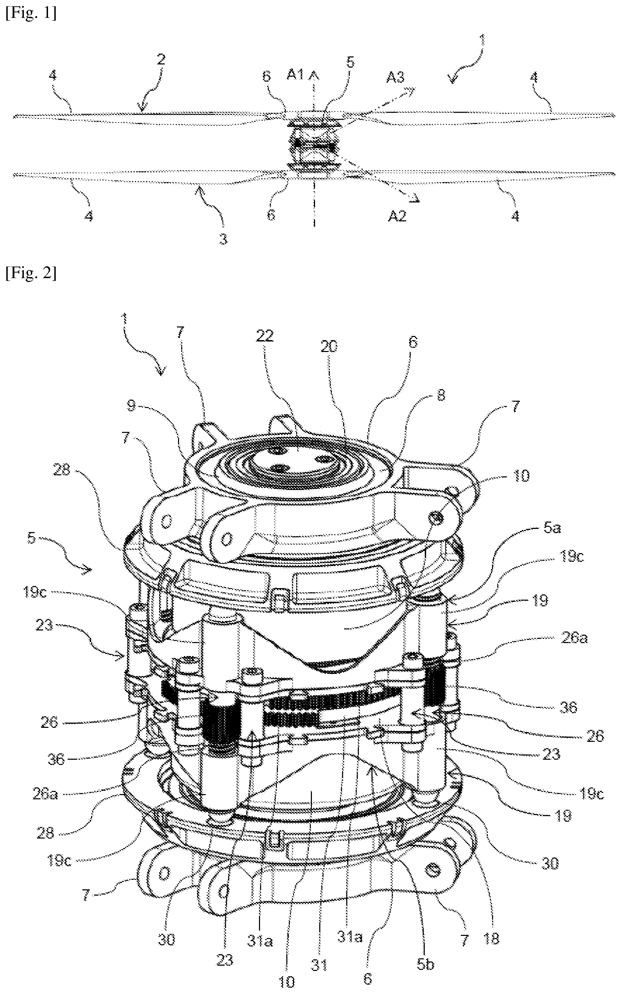

Si l'on se réfère tout d'abord à la Figure 1, on peut voir qu'un dispositif de propulsion 1 pour aérodyne à voilure tournante et à décollage et atterrissage verticaux comporte deux hélices 2 et 3 coaxiales et contrarotatives.

Les hélices 2 et 3 tournent autour d'un axe longitudinal qui est sur laFigure 1 confondu avec l'axe de lacet A1 et comprennent chacune trois pales 4 à pas fixe.

Le dispositif de propulsion 1 comprend un châssis creux 5 qui a un axe longitudinal qui, en utilisation, est coaxial à l'axe de lacet A1.

Chaque hélice 2 et 3 comporte un anneau porte-pales 6 à la périphérie duquel les pales 4 sont fixées.

Les deux hélices 2 et 3 sont espacées l'une au-dessus de l'autre selon l'axe de lacet A1. Chaque hélice 2 ou 3 définit un disque d'hélice qui correspond au plan géométrique dans lequel tourne chaque hélice et elle est entraînée en rotation autour d'un axe de rotation qui est perpendiculaire au disque d'hélice. Chaque hélice 2 et 3 peut également être inclinée autour de l'axe de roulis A2 et de l'axe de tangage A3 pour permettre le déplacement de l'aérodyne.

Le dispositif de propulsion 1 comporte des moyens d'entraînement 14 pour entraîner en rotation chaque hélice 2 et 3 autour de son axe de rotation.

Il comporte également des moyens de commande d'inclinaison pour incliner les deux hélices 2 et 3, d'une façon parallèle, et autour de l'axe de roulis A2 et/ou de l'axe de tangage A3.

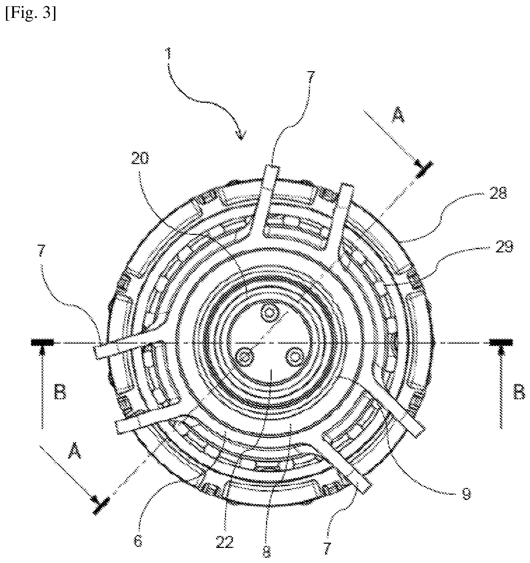

On se réfère maintenant également aux Figures 2 à 4, sur lesquelles les pales 4 sont retirées. On remarque que, sur ces Figures, les deux anneaux porte-pales 6 sont orientés de façon identique. Ainsi on voit pour chaque anneau porte-pales 6 les trois bras 7 qui permettent de fixer les pales 4 sur l'anneau porte-pales 6.

Chaque anneau porte-pales 6 comporte un logement cylindrique à l'intérieur duquel est fixé, par exemple par montage en force, un siège sphérique 8 qui est destiné à recevoir une portion de sphère 9. Il serait également possible de réaliser l'anneau porte-pales 6 et le siège sphérique 8 d'une seule pièce.

La portion de sphère 9 est elle-même emmanchée sur une cage 10 en forme de cloche et par ailleurs une goupille 11 solidaire de la cage 10 traverse la portion de sphère 9 et circule dans une rainure 12 réalisée dans le siège sphérique 8.

Ce montage : portion de sphère 9, siège sphérique 8, goupille 11 et rainure 12 constitue une liaison rotule à doigt 13 qui permet de relier l'anneau porte-pales 6 aux moyens d'entraînement 14.

L'entraînement d'une hélice par l'intermédiaire d'une liaison rotule à doigt est déjà décrit dans le brevet FR3095189. La goupille 11 assure la liaison en rotation de l'anneau porte-pales 6 et de la cage 10. L'anneau porte-pales 6 peut osciller autour de l'axe A'3 de la goupille 11 qui est parallèle à l'axe de tangage A3. Grâce à la rainure 12, l'anneau porte-pales 6 peut aussi pivoter autour d'un axe A'2 qui est parallèle à l'axe de roulis A2 (perpendiculaire aux axes de lacet A1 et de tangage A3). Bien entendu la liaison rotule à doigt 13 immobilise en translation l'anneau porte-pales 6 et la cage 10.

Les inclinaisons de chaque liaison rotule à doigt 13 autour de ses axes A'2 et A'3 étant synchronisées, les axes de roulis A2 et de tangage A3 du dispositif de propulsion 1 sont parallèles aux axes A'2 et A'3 et passent par le centre du dispositif 1 (milieu de la droite reliant les centres O des rotules).

Le centre O de chaque liaison rotule à doigt 13 est l'intersection du disque d'hélice de l'hélice considérée et de l'axe de lacet A1 et l'axe de la liaison rotule à doigt 13 est ici l'axe de lacet A1 confondu avec l'axe de la cage 10.

Selon la présente invention, les moyens d'entraînement 14 comprennent des moyens moteurs qui comprennent, pour chaque hélice 2 et 3, un moteur couple 15 (moteur de forme annulaire pour lequel le rotor entraîne directement l'axe sur lequel il est monté) dont le rotor 15a est solidaire de la cage 10 et dont le stator 15b est interne au rotor 15a et solidaire du châssis 5. Chaque moteur couple 15 est positionné de telle sorte que l'axe de rotation du rotor 14a est coaxial à l'axe de lacet A1.

Les moteurs couples sont bien connus de l'Homme du Métier. Ils présentent l'avantage de fournir un couple important avec un encombrement réduit. Ils associent un rotor réalisé en un matériau formant un aimant permanent et un stator portant les bobinages. Le rotor est désolidarisable du stator pour faciliter le montage.

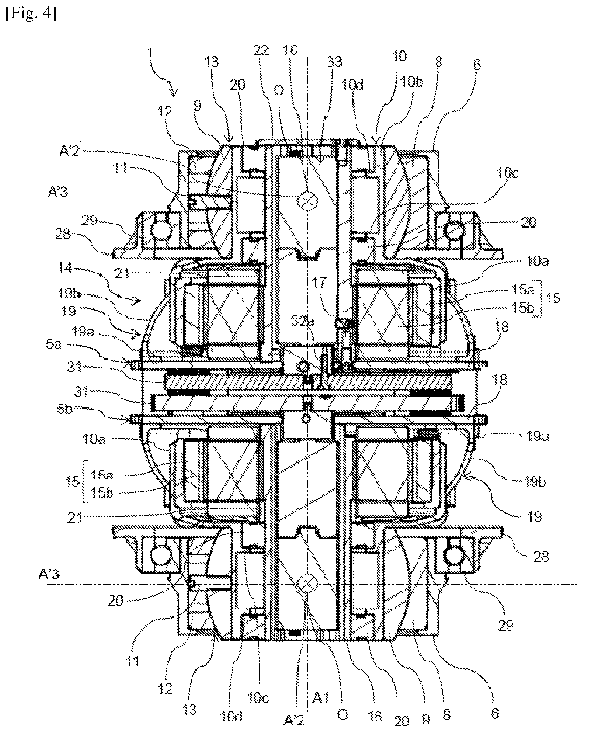

Comme on peut le voir sur la Figure 4, pour chaque moteur couple 15 le châssis 5 comprend un moyeu axial 16 se présentant sous la forme d'une pièce tubulaire dont l'axe longitudinal est coaxial à l'axe de lacet A1 et dont une première extrémité est fixée par des vis axiales 17 à une plaque de fond 18, globalement circulaire, à la périphérie de laquelle est également fixée une pièce annulaire 19 présentant un retour 19a appliqué contre la plaque circulaire 18 et une paroi latérale 19b circonférentielle qui définit deux paires de logements 19c espacés angulairement les uns des autres de 90° et dont la fonction sera discutée ci-après, ces logements 19c comprenant chacun un trou traversant d'axe longitudinal parallèle à l'axe de lacet A1.

Chaque stator 15b est monté autour du moyeu axial 16 respectif et rendu solidaire de ce dernier.

La cage 10 est en forme de cloche et présente une première partie tubulaire 10a de plus grand diamètre, qui entoure le moteur couple 15 et à laquelle le rotor 15a est rendu solidaire, et une seconde partie tubulaire 10b de plus petit diamètre, qui porte la goupille 11 et qui est positionnée sur les bagues extérieures de deux roulements à billes 20 montés sur le moyeu axial 16. Les deux parties tubulaires 10a, 10b ont un même axe longitudinal qui est coaxial à l'axe de lacet A1. L'un des roulements 20 est en butée contre une entretoise 21 par sa bague intérieure et contre un premier épaulement 10c sur la face interne de la seconde partie tubulaire 10b, tandis que l'autre roulement 20 est en butée contre un second épaulement 10d sur la face interne de la seconde partie tubulaire 10b et, pour l'hélice supérieure 2, contre un flasque 22 fermant le moyeu axial 16 à sa seconde extrémité et auquel il est vissé, et, pour l'hélice inférieure 3, contre une butée portée par le corps de l'aérodyne sur lequel le dispositif de propulsion 1 est fixé.

Ainsi, la portion de sphère 9 étant emmanchée sur la seconde partie tubulaire 10b de la cage 10, l'on comprendra aisément qu'une rotation du rotor 15a autour du stator 15b entraîne une rotation de la cage 10, et par voie de conséquence de la portion de sphère 9 et, du fait de la liaison rotule à doigt 13, de l'anneau porte-pales 6, autour de l'axe de lacet A1.

Comme on le remarque à la Figure 4, le montage des moteurs couples 15 est identique pour l'entraînement des deux liaisons rotules à doigt 13.

Dans le présent mode de réalisation, le châssis 5 est divisé en deux boîtiers 5a et 5b servant de supports et pouvant être assemblés l'un à l'autre par des boulons et entretoises 23 (visibles notamment sur la Figure 2) régulièrement réparties à la périphérie et passant par des oreilles prévues à cet effet. Chaque boîtier 5a ou 5b est associé à une hélice 2 ou 3 distincte et comprend le moyeu axial 16, la plaque 18, la pièce annulaire 19 et le flasque 22.

Ainsi, chaque boîtier 5a, 5b porte de manière fixe un stator 15b monté sur le moyeu axial 16 et un rotor 15a entraînant en rotation une cage 10 montée à rotation sur le moyeu axial 16 et entraînant une liaison rotule à doigt 13 qui entraîne l'hélice associée audit boîtier 5a ou 5b.

Cette symétrie des boîtiers 5a et 5b simplifie la fabrication car les pièces sont identiques pour chaque boîtier. Le montage est également simplifié car chaque boîtier 5a ou 5b peut être équipé individuellement de sa liaison rotule à doigt 13 et de ses moyens d'entraînement en rotation de celle-ci. L'assemblage des deux boîtiers complètera l'intégration du dispositif 1.

On remarque par ailleurs que la structure compacte des moteurs couples 15 permet de définir un dispositif peu encombrant et pour lequel le volume interne des moyeux axiaux 16 reste disponible.

On va maintenant décrire les moyens de commande d'inclinaison 24 avec référence aux Figures 2, 5 et 6.

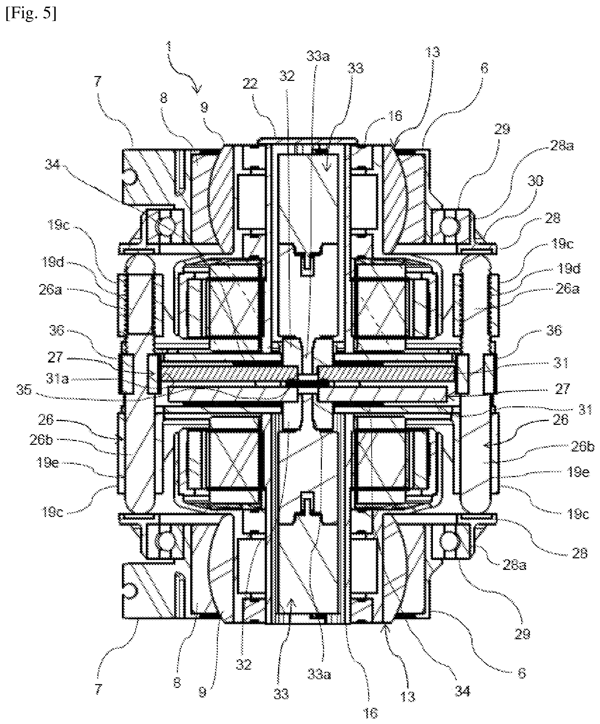

Ces moyens comprennent deux paires 25a et 25b de tiges de commande 26 de longueur fixe. Comme on peut le voir sur la Figure 5, ces tiges 26 sont situées entre les hélices 2 et 3 et elles sont toutes parallèles à l'axe de lacet A1.

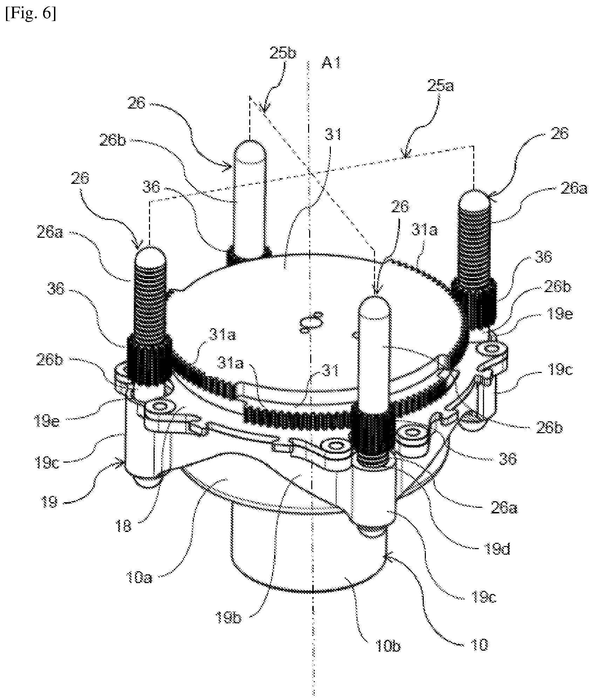

Les deux tiges 26 d'une même paire 25a ou 25b sont disposées de façon diamétralement opposées l'une de l'autre par rapport à l'axe de lacet A1 (Figure 6) et, dans le mode de réalisation représenté, les plans des deux paires 25a et 25b sont décalés angulairement de 90°, le plan d'une paire 25a ou 25b étant le plan auquel appartiennent les axes longitudinaux des deux tiges 26. Chaque tige 26 s'étend à travers à la fois le trou traversant d'un logement 19c du boîtier 5a et le trou traversant d'un logement 19c respectif du boitier 5b.

Les tiges 26 d'une même paire 25a ou 25b sont déplaçables en translation par un dispositif de commande 27 respectif, parallèlement à l'axe de lacet A1, dans les deux sens, de façon à ce que chaque tige 26 soit apte à appuyer par chaque extrémité sur un plateau 28 qui est solidaire en translation de l'anneau porte-pales 6 d'une hélice 2 ou 3 de façon à le faire basculer autour de l'axe de roulis A2, pour une première paire 25a, ou de l'axe de tangage A3, pour une seconde paire 25b.

Cette configuration diffère donc de façon majeure de celle décrite par la demande de brevet FR3095189 en ce qu'il n'y a plus ici que quatre tiges et que chaque tige agit de façon positive sur les anneaux porte-pales 6. Il n'y a donc plus une tige motrice et une tige miroir, destinée à équilibrer les efforts de la tige motrice, ainsi que des tiges de rattrapage d'usure, mais uniquement deux tiges motrices pour chaque paire qui agissent toutes deux sur les anneaux porte-pales 6.

Afin d'éviter l'usure des extrémités des tiges 26 par frottement sur les anneaux porte-pales 6, chaque plateau 28 est relié à un anneau porte-pales 6 d'une hélice par un roulement 29 (Figure 5) qui permet de désolidariser en rotation le plateau 28 et l'anneau porte-pales 6 de l'hélice considérée.

Comme on peut le voir en particulier sur la Figure 5, le plateau 28 comporte une collerette 28a qui délimite le logement du roulement 29 qui pourra être monté en force ou collé. La bague interne du roulement 29 se positionne sur une portée de l'anneau porte-pales 6 où elle est montée en force ou collée.

On positionnera sur chaque plateau 28 des disques aimantés 30 disposés en regard des extrémités des tiges 26 (Figures 2 et 5), ces dernières étant à cet effet faites, au moins à leurs extrémités libres, de matériau ferromagnétique.

Ces disques 30 complètent l'action du roulement 29. Les efforts de frottement de roulement pourraient en effet entraîner une rotation résiduelle du plateau 28. Les disques aimantés 30 sont attirés par les tiges 26 et bloquent cette rotation, réduisant ainsi les frottements relatifs entre les tiges 26 et les plateaux 28.

Par ailleurs, chaque plateau 28 peut être relié par des ressorts de rappel (ressorts de traction, non représentés) au boîtier 5a ou 5b portant l'hélice associée audit plateau 28. Ces ressorts permettent d'éviter les rebonds éventuels des plateaux 28 sur les tiges 26. Ils plaquent les plateaux 28 sur les extrémités des tiges 26 et réduisent les vibrations.

Le dispositif de commande 27 pour chaque paire 25a, 25b de tiges 26 comprend une roue de commande 31 qui est montée à rotation sur le châssis 5 de façon à pouvoir tourner autour d'un axe de rotation coaxial à l'axe de lacet A1.

Comme on peut le voir sur la Figure 5, chaque roue de commande 31 présente un trou traversant central par lequel elle est montée solidaire en rotation sur un organe de transmission 32 par une vis axiale 32a, lequel organe de transmission 32 est reçu à travers un trou traversant prévu à cet effet dans la plaque 18 et lui-même rendu solidaire (par goupille, Figure 4) en rotation de l'arbre de sortie 33a d'une motorisation 33 montée dans l'espace intérieur du moyeu axial 16 respectif. Une couche 34 de matériau antifriction, par exemple sous la forme d'un disque, est interposée entre chaque roue de commande 31 et la plaque 18 respective.

On peut souligner ici que, dans le mode de réalisation représenté, lors de l'assemblage des boîtiers 5a et 5b l'un à l'autre, les plaques 18 sont placées à distance l'une de l'autre, par l'utilisation des boulons et entretoises 23, de façon à définir les boîtiers 5a et 5b un intervalle ouvert latéralement et dans lequel les roues de commande 31 se situent. Les roues de commande 31 sont ainsi empilées l'une sur l'autre, avec interposition d'une couche 35 de matériau antifriction entre elles.

Chaque roue de commande 31 présente deux secteurs dentés 31a diamétralement opposés et chacun en engrènement avec un pignon de commande 36 solidaire d'une tige 26 respective, de telle sorte qu'une rotation de la roue de commande 31 dans un sens entraîne une rotation des deux pignons de commande 36 et donc des deux tiges 26.

Chaque tige 26 d'une même paire 25a ou 25b comprend par ailleurs une partie filetée 26a engagée dans le trou traversant 19d d'un logement 19c qui sera à cet effet taraudé, et une partie lisse 26b engagée dans le trou traversant 19e d'un logement 19c qui sera à cet effet lisse. Les parties filetée 26a et lisse 26b sont séparées par le pignon de commande 36.

Les trous taraudés 19d étant fixes par rapport au châssis 5, puisque portés par la pièce annulaire 18 fixée sur la plaque 17, l'on comprendra aisément que la rotation d'une tige 26 dans un premier sens de rotation résultera en une translation de la tige 26 dans un premier sens parallèlement à l'axe de lacet A1 et que la rotation d'une tige 26 dans un second sens de rotation, opposé au premier sens de rotation, résultera en une translation de la tige 26 dans un second sens opposé au premier sens, les trous lisses 19e participant au guidage en translation des tiges 26.

Selon la présente invention, le sens du filetage de la partie filetée 26a et du trou taraudé 19d pour une tige 26 est l'inverse du sens du filetage de la partie filetée 26a et du trou taraudé 19d pour l'autre tige 26. Ainsi, bien que les deux tiges 26 soient entraînées en rotation dans un même sens de rotation par la roue de commande 31, l'une des tiges 26 se déplacera pour appuyer sur l'un des anneaux porte-pales 6 tandis que l'autre tige 26 se déplacera pour appuyer sur l'autre anneau porte-pales 6. En d'autres termes, selon la présente invention les tiges 26 d'une même paire 25a ou 25b ont des mouvements de translation antagonistes obtenus par un même mouvement d'entrée de rotation de la roue de commande 31.

Les moyens de commande d'inclinaison 24 sont ainsi capables de faire basculer de manière synchronisée les deux hélices 2 et 3 autour de l'axe de roulis A2 ou de l'axe de tangage A3 par une commande mécanique positive au niveau de chaque tige 26 d'une même paire 25a ou 25b.

Les secteurs dentés 31a et les pignons de commande 36 seront dimensionnés, par exemple leurs angles d'ouverture, le rapport de transmission, etc., pour maintenir un engrènement sur la course maximale souhaitée pour les tiges 26, autrement dit pour les angles d'inclinaison maximales souhaités autour de l'axe de roulis A2 et de l'axe de tangage A3. Comme on peut le voir sur les Figures 5 et 6, afin de ne pas augmenter la dimension en hauteur et la masse du dispositif de propulsion 1, les pignons de commande 36 auront avantageusement une épaisseur supérieure à celle de la roue de commande 31 respective.

Dans le mode de réalisation représenté, les parties filetées 26a des tiges 26 d'une même paire 25a ou 25b sont engagées dans des trous taraudés 19d qui sont portés par le même boîtier, tandis que les parties lisses 26b seront engagées dans des trous lisses 19e portés par l'autre boîtier. Afin de conserver la symétrie des boîtiers 5a et 5b, qui simplifie la fabrication, chaque boîtier 5a et 5b portera deux trous taraudés 19d diamétralement opposés, pour engagement des tiges 26 d'une paire 25a ou 25b, et deux trous lisses 19e diamétralement opposés pour engagement des tiges 26 de l'autre paire 25b ou 25a.

On constate donc que le dispositif de propulsion 1 selon l'invention est très compact, l'ensemble des moyens d'entraînement en rotation des rotors et des moyens de commande de l'inclinaison des rotors autour des axes de roulis et de tangage se situant entre les deux rotors.

Par ailleurs la commande de l'inclinaison des hélices par deux paires de tiges toutes deux motorisées assure une commande plus fiable que la solution selon l'art antérieur. Elle évite la latence mécanique lors de la commande, réduit les jeux et permet d'équilibrer les efforts entre les deux tiges d'une même paire. Il en résulte une commande tout à la fois simplifiée, plus fiable et plus robuste.

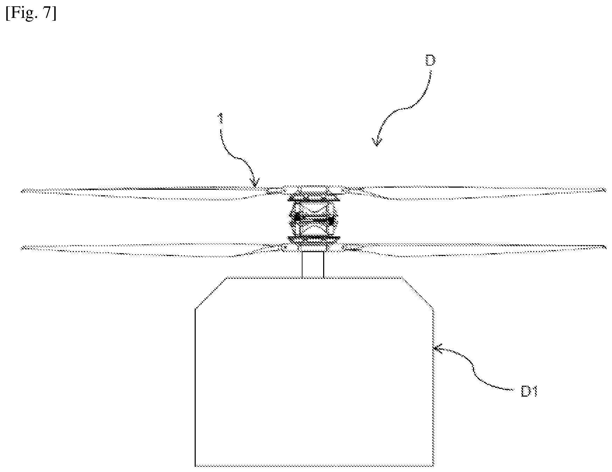

Ainsi, comme on peut le voir sur la figure 7, où l'on a représenté très schématiquement un aérodyne ou drone D dont le corps D1 est équipé du dispositif de propulsion 1, la hauteur totale du drone D n'est pas affectée par la présence du dispositif de propulsion 1. On peut donc augmenter la taille des pales sans pour autant augmenter obligatoirement la taille du reste de l'aérodyne, pour une furtivité à la fois visuelle et sonore.

Le dispositif de propulsion 1 selon l'invention permet de faciliter le montage, la maintenance et la réparation.

En effet, le simple démontage du châssis 5 par désolidarisation des deux boîtiers 5a et 5b donne accès directement à l'ensemble des composants des moyens d'inclinaison, pour permettre par exemple leur remplacement.

Chaque boîtier 5a ou 5b porte son moteur couple 14 qui peut donc être remplacé aisément.

Enfin les moyeux axiaux 15 délimitent chacun le logement de moyens moteurs 33, comme par exemple un moteur rotatif électrique pas-à-pas, pour la commande d'inclinaison qui peut également être démontée sans démonter le reste du dispositif.

On notera que les batteries d'alimentation électrique seront de préférence logées dans le drone D et reliées aux différents moteurs par des câbles non représentés. La traversée électrique de l'intervalle entre les boîtiers 5a et 5b pourra être réalisée au moyen de contacts électriques à ressort bien connus de l'Homme du Métier, qui seront fixés à un des fonds de boîtiers.

Il est bien entendu que le mode de réalisation particulier qui vient d'être décrit a été donné à titre indicatif et non limitatif, et que des modifications peuvent être apportées sans que l'on s'écarte pour autant du cadre de la présente invention.

## Revendications

1. Dispositif de propulsion (1) pour aérodyne (D) à voilure tournante et à décollage et atterrissage verticaux, par hélices (2, 3) coaxiales et contrarotatives mobiles en lacet, roulis et tangage, le dispositif de propulsion (1) comprenant :
- un châssis (5) creux et ayant un axe longitudinal qui, en utilisation, est coaxial à un axe de lacet (A1),
- une hélice supérieure (2) et une hélice inférieure (3) ayant chacune un anneau porte-pales (6) à la périphérie duquel des pales (4) à pas fixe sont fixées ou destinées à être fixées, les hélices (2, 3) étant espacées l'une au-dessus de l'autre selon l'axe de lacet (A1), chaque hélice (2, 3) définissant un disque d'hélice et étant apte à être entraînée en rotation autour d'un axe de rotation qui est perpendiculaire au disque d'hélice et à être inclinée autour d'un axe de roulis (A2) et d'un axe de tangage (A3),
- des moyens d'entraînement (14) pour entraîner en rotation chaque hélice (2, 3) autour de son axe de rotation, l'anneau porte-pales (6) de chaque hélice (2, 3) étant relié aux moyens d'entraînement (14) par une liaison rotule à doigt (13), dont le centre est une intersection du disque d'hélice respectif et de l'axe de lacet (A1) et dont l'axe est l'axe de rotation de l'hélice (2, 3), et
- des moyens de commande d'inclinaison (24) pour incliner les hélices (2, 3) autour de l'axe de roulis (A2) et de l'axe de tangage (A3),
où les moyens de commande d'inclinaison (24) comprennent :
- deux paires (25a, 25b) de tiges de commande (26), les tiges de commande (26) étant de longueur fixe, situées entre les hélices (2, 3) et parallèles à l'axe de lacet (A1), les deux tiges de commande (26) d'une même paire (25a, 25b) étant disposées de façon diamétralement opposées l'une de l'autre par rapport à l'axe de lacet (A1), chaque tige de commande (26) étant déplaçable en translation parallèlement à l'axe de lacet (A1), dans les deux sens, de telle sorte que chaque tige de commande (26) est apte à appuyer par une extrémité de celle-ci sur un anneau porte-pales (6) d'une hélice (2, 3) de façon à la faire basculer autour de l'axe de roulis (A2) pour une première paire (25a, 25b) ou de l'axe de tangage (A3) pour une seconde paire (25a, 25b), et
- deux dispositifs de commande (27) servant chacun à commander le déplacement en translation des tiges de commande (26) de l'une respective desdites paires (25a, 25b), chaque dispositif de commande (27) comprenant une roue de commande (31) montée rotative autour d'un axe de rotation coaxial à l'axe de lacet (A1) et dont la rotation est commandée par des moyens moteurs (33),
deux pignons de commande (36) étant montés chacun sur l'une respective des tiges de commande (26) et en engrènement direct avec la roue de commande (31), et le châssis (5) portant, pour chaque tige de commande (26), un trou taraudé (19d) dans lequel est vissée une partie filetée (26a) de la tige de commande (26), un sens du filetage de la partie filetée (26a) et du trou taraudé (19d) pour une tige de commande (26) d'une paire (25a, 25b) étant l'inverse du sens du filetage de la partie filetée (26a) et du trou taraudé (19d) pour l'autre tige de commande (26) de ladite paire (25a, 25b), ce par quoi une rotation d'une roue de commande (31) conduit à des mouvements de translation antagonistes des deux tiges de commande (26) d'une même paire (25a, 25b).

2. Dispositif de propulsion (1) selon la revendication 1, **caractérisé par le fait que** les tiges de commande (26) sont au nombre de quatre et décalées angulairement les unes des autres de 90°.

3. Dispositif de propulsion (1) selon l'une quelconque des revendications 1 et 2, **caractérisé par le fait que** chaque tige de commande (26) comprend la partie filetée (26a) et une partie lisse (26b), le pignon de commande (36) respectif est monté entre la partie filetée (26a) et la partie lisse (26b), et chaque partie lisse (26b) s'étend à travers un trou lisse (19e) de guidage en translation porté par le châssis (5).

4. Dispositif de propulsion (1) selon l'une quelconque des revendications 1 à 3, **caractérisé par le fait que** chaque roue de commande (31) est dentée seulement sur deux secteurs (31a) diamétralement opposés et dimensionnés chacun pour que l'engrènement avec le pignon de commande (36) respectif soit maintenu sur toute la course de translation de la tige de commande (26) respective, par exemple une épaisseur des pignons de commande (36) étant à cet effet supérieure à celle de la roue de commande (31).

5. Dispositif de propulsion selon l'une quelconque des revendications 1 à 4, **caractérisé par le fait que** les deux roues de commande (36) sont empilées l'une sur l'autre, avec une couche (35) de matériau antifriction interposé entre elles.

6. Dispositif de propulsion (1) selon l'une quelconque des revendications 1 à 5, **caractérisé par le fait que** chaque anneau porte-pales (6) porte un plateau (28) contre lequel les tiges de commande (26) sont en contact, chaque plateau (28) étant relié à l'anneau porte-pales (6) respectif par un roulement (29) permettant de désolidariser en rotation le plateau (28) et l'anneau porte-pales (6) respectif.

7. Dispositif de propulsion (1) selon l'une quelconque des revendications 1 à 6, **caractérisé par le fait que** les moyens moteurs (33) servant à faire tourner une roue de commande (31) se situent à l'intérieur du châssis (5), entre ladite roue de commande (31) et l'hélice (2, 3) associée.

8. Dispositif de propulsion (1) selon l'une quelconque des revendications 1 à 7, **caractérisé par le fait que** le châssis (5) est divisé en deux boîtiers (5a, 5b) aptes à être assemblés l'un à l'autre, chaque boîtier (5a, 5b) étant associé à une hélice (2, 3) respective et portant les moyens d'entraînement (14), pour entraîner en rotation ladite hélice (2, 3), et la liaison rotule à doigt (13) respective, chaque boîtier (5a, 5b) portant également une roue de commande (31) et les trous (19d, 19e) à travers chacun desquels est engagé une tige de commande (26) respective.

9. Dispositif de propulsion (1) selon la revendication 8, **caractérisé par le fait que** chaque boîtier (5a, 5b) comprend une plaque de fond (18) à partir de laquelle s'étend, sur un côté de la plaque de fond (18), une paroi latérale circonférentielle (19b) définissant des logements (19c) dans lesquels sont ménagés des trous taraudés (19d) ou, le cas échéant, des trous lisses (19e) ou les deux.

10. Dispositif de propulsion (1) selon la revendication 9, **caractérisé par le fait que** chaque roue de commande (31) est montée sur l'autre côté de la plaque de fond (18), avec de préférence une couche (34) de matériau antifriction interposée entre la plaque de fond (18) et la roue de commande (31), les plaques de fond (18) délimitant, une fois les boîtiers (5a, 5b) assemblés l'un à l'autre, un intervalle ouvert latéralement dans lequel se situent les roues de commande (31).

11. Dispositif de propulsion (1) selon l'une quelconque des revendications 1 à 10, **caractérisé par le fait que** les moyens d'entraînement (14) comprennent, pour chaque hélice (2, 3), un moteur couple (15) dont le rotor (15a) est solidaire d'une cage (10) sur laquelle est fixée la liaison rotule à doigt (13) sur laquelle pivote l'anneau porte-pales (6) de ladite hélice (2, 3), et dont le stator (15b) est solidaire du châssis (5).

12. Dispositif de propulsion (1) selon la revendication 11 lorsque prise en dépendance de l'une quelconque des revendications 9 et 10, **caractérisé par le fait qu'**un moyeu axial (16) est fixé sur chaque plaque de fond (18), du même côté que la paroi latérale circonférentielle (19), chaque moyeu axial (16) se présentant sous la forme d'une pièce tubulaire dont l'axe longitudinal est coaxial à l'axe de lacet (A1), le stator (15b) du moteur couple (15) entourant le moyeu axial (16) respectif.

13. Dispositif de propulsion (1) selon la revendication 12, **caractérisé par le fait que** la cage (10) est en forme de cloche et comprend une première partie tubulaire (10a) de plus grand diamètre, qui entoure le moteur couple (15) et dont le rotor (15a) est solidaire, et une seconde partie tubulaire (10b), de plus petit diamètre, entourant le moyeu axial (16) et montée à rotation sur ce dernier, la liaison rotule à doigt (13) étant fixée à la seconde partie tubulaire (10b).

14. Dispositif de propulsion (1) selon l'une quelconque des revendications 12 et 13, **caractérisé par le fait que** les moyens moteurs (33) servant à faire tourner une roue de commande (31) se situent à l'intérieur du moyeu axial (16) respectif.

15. Aérodyne à voilure tournante et à décollage et atterrissage verticaux, dont la propulsion est assurée par un dispositif de propulsion (1), **caractérisé par le fait que** le dispositif de propulsion (1) est tel que défini à l'une quelconque des revendications 1 à 14.

## Patentansprüche

1. - Antriebsvorrichtung (1) für ein Drehflügelflugzeug (D) mit senkrechtem Start und Landung durch koaxiale und gegenläufige Propeller (2, 3), die bei Gieren, Rollen und Nicken beweglich sind, die Antriebsvorrichtung (1) umfassend:
- einen Rahmen (5), der hohl ist und eine Längsachse aufweist, die im Gebrauch koaxial zu einer Gierachse (A1) ist,
- einen oberen Propeller (2) und einen unteren Propeller (3), die jeweils einen Schaufelträgerring (6) aufweisen, an dessen Umfang Schaufeln (4) mit fester Steigung befestigt sind oder dazu bestimmt sind, befestigt zu werden, wobei die Propeller (2, 3) entlang der Gierachse (A1) übereinander beabstandet sind, jeder Propeller (2, 3) eine Propellerscheibe definiert und geeignet ist, um um eine Drehachse gedreht zu werden, die senkrecht zu der Propellerscheibe ist, und um eine Rollachse (A2) und eine Nickachse (A3) geneigt zu werden,
- Antriebseinrichtungen (14), um jeden Propeller (2, 3) um seine Drehachse in Drehung zu versetzen, und wobei der Schaufelträgerring (6) von jedem Propeller (2, 3) mit den Antriebseinrichtungen (14) durch eine Kugelgelenk-Fingerverbindung (13) verbunden ist, deren Mitte die Schnittstelle der entsprechenden Propellerscheibe und der Gierachse (A1) ist, und deren Achse die Drehachse des Propellers (2, 3) ist,
- Neigungssteuereinrichtungen (24), um die Propeller (2, 3) um die Rollachse (A2) und die Nickachse (A3) zu neigen,
wobei die Neigungssteuereinrichtungen (24) Folgendes umfassen:
- zwei Paare (25a, 25b) von Steuerstangen (26), wobei die Steuerstangen (26) von fester Länge sind, die sich zwischen den Propellern (2, 3) befinden und parallel zu der Gierachse (A1) sind, wobei die zwei Steuerstangen (26) eines gleichen Paars (25a, 25b) in Bezug auf die Gierachse (A1) diametral gegenüberliegend zueinander angeordnet sind, wobei jede Steuerstange (26) parallel zu der Gierachse (A1) in beide Richtungen translatorisch verschiebbar ist, sodass jede Steuerstange (26) geeignet ist, um mit einem Ende davon auf einen Schaufelträgerring (6) eines Propellers (2, 3) zu drücken, um ihn für ein erstes Paar (25a, 25b) um die Rollachse (A2) oder für ein zweites Paar (25a, 25b) die Nickachse (A3) kippen zu lassen, und
- zwei Steuervorrichtungen (27), die jeweils zum Steuern der Translationsbewegung der Steuerstangen (26) eines jeweiligen der Paare (25a, 25b) dienen, jede Steuervorrichtung (27) umfassend ein Steuerrad (31), das drehbar um eine zu der Gierachse (A1) koaxiale Drehachse montiert ist und dessen Drehung durch eine Motoreinrichtung (33) gesteuert wird,
zwei Antriebsritzel (36), die jeweils an einer entsprechenden der Steuerstangen (26) montiert sind und in direktem Eingriff mit dem Steuerrad (31) sind, und wobei der Rahmen (5) für jede Steuerstange (26) eine Gewindebohrung (19d) trägt, in die ein Gewindeabschnitt (26a) der Steuerstange (26) geschraubt ist, wobei eine Richtung des Gewindes des Gewindeabschnitts (26a) und der Gewindebohrung (19d) für eine Steuerstange (26) eines Paars (25a, 25b) die Umkehrung der Richtung des Gewindes des Gewindeabschnitts (26a) und der Gewindebohrung (19d) für die andere Steuerstange (26) des Paars (25a, 25b) ist, wodurch eine Drehung eines Steuerrads (31) zu entgegengesetzten Translationsstangenbewegungen der zwei Steuerstangen (26) eines gleichen Paars (25a, 25b) führt.

2. - Antriebsvorrichtung (1) nach Anspruch 1, **dadurch gekennzeichnet, dass** die Steuerstangen (26) vier an der Zahl sind und winkelmäßig um 90° voneinander versetzt sind.

3. - Antriebsvorrichtung (1) nach einem der Ansprüche 1 oder 2, **dadurch gekennzeichnet, dass** jede Steuerstange (26) den Gewindeabschnitt (26a) und einen glatten Abschnitt (26b) umfasst, das jeweilige Steuerritzel (36) zwischen dem Gewindeabschnitt (26a) und dem glatten Abschnitt (26b) montiert ist, und jeder glatte Abschnitt (26b) sich durch ein glattes Translationsführungsloch (19e) erstreckt, das von dem Rahmen (5) getragen wird.

4. - Antriebsvorrichtung (1) nach einem der Ansprüche 1 bis 3, **dadurch gekennzeichnet, dass** jedes Steuerrad (31) nur auf zwei diametral gegenüberliegenden Sektoren (31a) gezahnt ist, die jeweils bemessen sind, damit der Eingriff mit dem jeweiligen Antriebsritzel (36) über den gesamten Translationshub der jeweiligen Steuerstange (26) aufrechterhalten wird, wobei zu diesem Zweck beispielsweise eine Stärke der Antriebsritzel (36) größer ist als die des Steuerrads (31).

5. - Antriebsvorrichtung nach einem der Ansprüche 1 bis 4, **dadurch gekennzeichnet, dass** die zwei Antriebsräder (36) übereinander gestapelt sind, wobei eine Schicht (35) aus reibungsminderndem Material dazwischen angeordnet ist.

6. - Antriebsvorrichtung (1) nach einem der Ansprüche 1 bis 5, **dadurch gekennzeichnet, dass** jeder Schaufelträgerring (6) eine Platte (28) trägt, an der die Steuerstangen (26) anliegen, wobei jede Platte (28) durch ein Lager (29) mit dem jeweiligen Schaufelträgerring (6) verbunden ist, das es ermöglicht, die Platte (28) und den jeweiligen Schaufelträgerring (6) in Drehung zu entkoppeln.

7. - Antriebsvorrichtung (1) nach einem der Ansprüche 1 bis 6, **dadurch gekennzeichnet, dass** die Motoreinrichtungen (33) zum Drehen eines Steuerrads (31) innerhalb des Rahmens (5) zwischen dem Steuerrad (31) und dem Assoziierten Propeller (2, 3) angeordnet sind.

8. - Antriebsvorrichtung (1) nach einem der Ansprüche 1 bis 7, **dadurch gekennzeichnet, dass** der Rahmen (5) in zwei Gehäuse (5a, 5b) unterteilt ist, die geeignet sind, um miteinander verbunden zu werden, wobei jedes Gehäuse (5a, 5b) mit einem jeweiligen Propeller (2, 3) assoziiert ist und die Antriebseinrichtungen (14), um den Propeller (2, 3) in Drehung zu versetzen, und die jeweilige Kugelgelenk-Fingerverbindung (13) trägt, jedes Gehäuse (5a, 5b) auch ein Steuerrad (31) und die Löcher (19d, 19e) trägt, durch die jeweils eine entsprechende Steuerstange (26) eingegriffen wird.

9. - Antriebsvorrichtung (1) nach Anspruch 8, **dadurch gekennzeichnet, dass** jedes Gehäuse (5a, 5b) eine Bodenplatte (18) umfasst, von der sich auf einer Seite der Bodenplatte (18) eine umlaufende Seitenwand (19b) erstreckt, die Aufnahmen (19c) definiert, in denen Gewindebohrungen (19d) oder gegebenenfalls glatte Bohrungen (19e) oder beides ausgebildet sind.

10. - Antriebsvorrichtung (1) nach Anspruch 9, **dadurch gekennzeichnet, dass** jedes Steuerrad (31) auf der anderen Seite der Bodenplatte (18) montiert ist, wobei vorzugsweise eine Schicht (34) aus reibungsminderndem Material zwischen die Bodenplatte (18) und das Steuerrad (31) eingefügt ist, wobei die Bodenplatten (18), sobald die Gehäuse (5a, 5b) zusammengebaut sind, einen seitlich offenen Spalt begrenzen, in dem sich die Antriebsräder (31) befinden.

11. - Antriebsvorrichtung (1) nach einem der Ansprüche 1 bis 10, **dadurch gekennzeichnet, dass** die Antriebseinrichtungen (14) für jeden Propeller (2, 3) einen Drehmomentmotor (15) umfassen, dessen Rotor (15a) fest mit einem Käfig (10) verbunden ist, an dem die Kugelgelenk-Fingerverbindung (13) befestigt ist, an der der Schaufelring (6) des Propellers (2, 3) schwenkt, und dessen Stator (15b) fest mit dem Rahmen (5) verbunden ist.

12. - Antriebsvorrichtung (1) nach Anspruch 11, genommen abhängig von einem der Ansprüche 9 oder 10, **dadurch gekennzeichnet, dass** eine axiale Nabe (16) an jeder Bodenplatte (18) auf derselben Seite wie die umlaufende Seitenwand (19) befestigt ist, jede axiale Nabe (16) in Form eines rohrförmigen Teils vorliegt, dessen Längsachse koaxial zu der Gierachse (A1) ist, wobei der Stator (15b) des Drehmomentmotors (15) die jeweilige axiale Nabe (16) umgibt.

13. - Antriebsvorrichtung (1) nach Anspruch 12, **dadurch gekennzeichnet, dass** der Käfig (10) glockenförmig ist und einen ersten rohrförmigen Abschnitt (10a) mit größerem Durchmesser, der den Drehmomentmotor (15) umgibt und mit dem der Rotor (15a) fest verbunden ist, und einen zweiten rohrförmigen Abschnitt (10b) mit kleinerem Durchmesser, der die Axialnabe (16) umgibt und drehbar darauf montiert ist, umfasst, wobei die Kugelgelenk-Fingerverbindung (13) an dem zweiten rohrförmigen Abschnitt (10b) befestigt ist.

14. - Antriebsvorrichtung (1) nach einem der Ansprüche 12 oder 13, **dadurch gekennzeichnet, dass** sich die Motoreinrichtungen (33) zum Drehen eines Steuerrads (31) innerhalb der jeweiligen axialen Nabe (16) befinden.

15. - Senkrecht startendes und landendes Drehflügelflugzeug, deren Antrieb durch eine Antriebsvorrichtung (1) gewährleistet wird, **dadurch gekennzeichnet, dass** die Antriebsvorrichtung (1) wie definiert in einem der Ansprüche 1 bis 14 ist.

## Claims

1. - A propulsion device (1) for a vertical take-off and landing rotary-wing aerodyne (D), by means of coaxial contra-rotating propellers (2, 3) that can move in yaw, roll and pitch, the propulsion device (1) including:
- a hollow frame (5) having a longitudinal axis which, in use, is coaxial with a yaw axis (Al),
- an upper propeller (2) and a lower propeller (3) each having a blade carrier ring (6) to the periphery of which fixed pitch blades (4) are secured or intended to be secured, the propellers (2, 3) being spaced one above the other along the yaw axis (A1), each propeller (2, 3) defining a propeller disc and being adapted to be driven in rotation about an axis of rotation that is perpendicular to the propeller disc and to be tilted about a roll axis (A2) and a pitch axis (A3),
- drive means (14) for driving in rotation each propeller (2, 3) about its rotation axis, the blade carrier ring (6) of each propeller (2, 3) being connected to the drive means (14) by a pin spherical joint (13) connection, the centre of which is an intersection of the respective propeller disc and the yaw axis (A1) and the axis of which is the axis of rotation of the propeller (2, 3), and
- tilt control means (24) for tilting the propellers (2, 3) about the roll axis (A2) and the pitch axis (A3),
wherein the tilt control means (24) comprise:
- two pairs (25a, 25b) of control rods (26), the control rods (26) being of fixed length, located between the propellers (2, 3) and parallel to the yaw axis (A1), the two control rods (26) of the same pair (25a, 25b) being arranged diametrically opposed to each other with respect to the yaw axis (A1), each control rod (26) being translatable parallel to the yaw axis (A1), in both directions, so that each control rod (26) is capable of pressing by one end of it on a blade carrier ring (6) of a propeller (2, 3) to tilt it about the roll axis (A2) for a first pair (25a, 25b) or the pitch axis (A3) for a second pair (25a, 25b), and
- two control devices (27), each serving to control the translational movement of the control rods (26) of one respective of said pairs (25a, 25b), each control device (27) comprising a control wheel (31) rotatably mounted about an axis of rotation coaxial with the yaw axis (A1) and the rotation of which is controlled by motor means (33),
two control pinions (36), each being mounted on a respective one of the control rods (26) and meshing directly with the control wheel (31), and the frame (5) carrying, for each control rod (26), a threaded hole (19d) into which a threaded part (26a) of the control rod (26) is screwed, a threading direction of the threaded part (26a) and the threaded hole (19d) for one control rod (26) of a pair (25a, 25b) being the reverse of the threading direction of the threaded part (26a) and the threaded hole (19d) for the other control rod (26) of said pair (25a, 25b), whereby a rotation of a control wheel (31) leads to antagonistic translational movements of the two control rods (26) of the same pair (25a, 25b).

2. - The propulsion device (1) according to claim 1, **characterised in that** the control rods (26) are four in number and angularly offset from each other by 90°.

3. - The propulsion device (1) according to any one of claims 1 and 2, **characterised in that** each control rod (26) comprises the threaded part (26a) and a smooth part (26b), the respective control pinion (36) is mounted between the threaded part (26a) and the smooth part (26b), and each smooth part (26b) extends through a smooth hole (19e) for translation guidance, carried by the frame (5).

4. - The propulsion device (1) according to any one of claims 1 to 3, **characterised in that** each control wheel (31) is toothed only on two diametrically opposed sectors (31a) each dimensioned so that meshing with the respective control pinion (36) is maintained over the entire translation stroke of the respective control rod (26), for example a thickness of the control pinions (36) being for this purpose greater than that of the control wheel (31).

5. - The propulsion device according to any one of claims 1 to 4, **characterised in that** the two control wheels (36) are stacked one on top of the other, with a layer (35) of antifriction material interposed between them.

6. - The propulsion device (1) according to any one of claims 1 to 5, **characterised in that** each blade carrier ring (6) carries a plate (28) against which the control rods (26) are in contact, each plate (28) being connected to the respective blade carrier ring (6) by a bearing (29) allowing the plate (28) and the respective blade carrier ring (6) to be rotationally decoupled.

7. - The propulsion device (1) according to any one of claims 1 to 6, **characterised in that** the motor means (33) for rotating a control wheel (31) are located inside the frame (5), between said control wheel (31) and the associated propeller (2, 3).

8. - The propulsion device (1) according to any one of claims 1 to 7, **characterised in that** the frame (5) is divided into two cases (5a, 5b) adapted to be assembled to each other, each case(5a, 5b) being associated with a respective propeller (2, 3) and carrying the drive means (14), for driving in rotation said propeller (2, 3), and the respective pin spherical joint (13) connection, each case (5a, 5b) also carrying a control wheel (31) and the holes (19d, 19e) through each of which a respective control rod (26) is engaged.

9. - The propulsion device (1) according to claim 8, **characterised in that** each case (5a, 5b) comprises a base plate (18) from which extends, on one side of the base plate (18), a circumferential side wall (19b) defining housings (19c) in which threaded holes (19d) or, where applicable, smooth holes (19e), or both, are provided.

10. - The propulsion device (1) according to claim 9, **characterised in that** each control wheel (31) is mounted on the other side of the base plate (18), preferably with a layer (34) of antifriction material interposed between the base plate (18) and the control wheel (31), the base plates (18) delimiting, once the cases (5a, 5b) are assembled to each other, a laterally open gap in which the control wheels (31) are located.

11. - The propulsion device (1) according to any one of claims 1 to 10, **characterised in that** the drive means (14) comprise, for each propeller (2, 3), a torque motor (15), the rotor (15a) of which is secured to a cage (10) on which is secured the pin spherical joint (13) connection on which the blade carrier ring (6) of said propeller (2, 3) pivots, and the stator (15b) of which is secured to the frame (5).

12. - The propulsion device (1) according to claim 11 when depending on any one of claims 9 and 10, **characterised in that** an axial hub (16) is fixed on each base plate (18), on the same side as the circumferential side wall (19), each axial hub (16) being in the form of a tubular piece the longitudinal axis of which is coaxial with the yaw axis (A1), the stator (15b) of the torque motor (15) surrounding the respective axial hub (16).

13. - The propulsion device (1) according to claim 12, **characterised in that** the cage (10) is bell-shaped and comprises a first tubular part (10a) of larger diameter, which surrounds the torque motor (15) and to which the rotor (15a) is secured, and a second tubular part (10b), of smaller diameter, surrounding the axial hub (16) and mounted for rotation on the latter, the pin spherical joint (13) connection being secured to the second tubular part (10b).

14. - The propulsion device (1) according to any one of claims 12 and 13, **characterised in that** the motor means (33) for rotating a control wheel (31) are located inside the respective axial hub (16).

15. - A vertical take-off and landing rotary-wing aerodyne, whose propulsion is provided by a propulsion device (1), **characterised in that** the propulsion device (1) is as defined in any one of claims 1 to 14.
